# EUROPÄISCHE PATENTSCHRIFT

(11) **EP 2 066 423 B1**
(45) Veröffentlichungstag und Bekanntmachung des Hinweises auf die Patenterteilung: **08.06.2011**
(21) Anmeldenummer: 06805871.8
(22) Anmeldetag: 26.09.2006
(51) Int. Cl.: B01D 35/31, B01D 63/00, F16L 55/132

(54) **ANORDNUNG ZUM VERSCHLIESSEN EINES ENDABSCHNITTES EINES ROHRES ODER EINES ROHRFÖRMIGEN BEHÄLTNISSES**
ARRANGEMENT FOR SEALING AN END SECTION OF A TUBE OR OF A TUBULAR VESSEL
SYSTÈME DE FERMETURE DE LA PARTIE D'EXTRÉMITÉ D'UN TUBE OU D'UN RÉCIPIENT TUBULAIRE

(43) Veröffentlichungstag der Anmeldung: 10.06.2009
(73) Patentinhaber: Knappe, Holger, 26780 Malataverne (FR)
(72) Erfinder: Knappe, Holger, 26780 Malataverne (FR)
(74) Vertreter: Kossak, Sabine
(86) Internationale Anmeldenummer: PCT/EP2006/009346
(87) Internationale Veröffentlichungsnummer: WO 2008/037274

(56) Entgegenhaltungen:
- WO-A-97/35125
- WO-A-2004/001269
- WO-A-2004/057230
- DE-A1- 3 639 932
- US-A- 2 237 029
- US-A- 3 483 894
- US-A- 3 931 670
- US-A- 4 687 026
- US-A- 5 230 437
- US-A1- 2004 200 840
- US-A1- 2006 049 093

## Beschreibung

Die Erfindung betrifft eine Anordnung zum Verschließen eines Endabschnittes eines Rohres oder eines rohrförmigen Behältnisses mit einer zum Rohr zeigend angeordneten Abdichtplatte und einer vom Rohr wegzeigend angeordneten Frontplatte, wobei im Außenbereich der Platten eine umlaufende Dichtung angeordnet ist, die sich, zumindest teilweise, zwischen den zueinander zeigenden Seiten der Platten befindet.

Derartige Verschlussanordnungen sind bekannt. Sie werden beispielsweise in rohrförmigen Behältnissen zur Aufnahme von Membranfiltern in der Wasseraufbereitung eingesetzt. Sie sind dabei im Endbereich des rohrförmigen Behältnisses angeordnet und werden bei Beaufschlagung des Inneren des Behältnisses mit einem Medium unter Druck im Endabschnitt gehalten. Zwischen Frontplatte und Abdichtplatte befindet sich eine Dichtung, die eine Abdichtung des Zwischenraumes zwischen Platten und Innenwand des Behältnisses herbeiführt. Die Dichtung befindet sich in einer in oder zwischen den Platten angeordneten Nut. Durch die Beaufschlagung der Innenseite der Abdichtplatte mit einem druckbehafteten Medium erfolgt ein Anpressen der Dichtung gegen die Innenwand des Behältnisses. Wird der Druck wieder auf die Abdichtplatte unter einen Grenzwert verringert, entspannt sich auch die Dichtung, so dass bei einer erneuten Beaufschlagung Flüssigkeit durch den Dichtungsbereich hindurchtreten kann, bis wiederum eine optimale Dichtwirkung erzeugt wird. Dieses ist insbesondere problematisch, wenn es sich bei den druckbeaufschlagten Medien um umweltgefährdende Chemikalien handelt, oder wenn vermieden werden muss, dass, bedingt durch die Reinheit des beaufschlagten Mediums, Verunreinigungen in das Innere des Behältnisses hineingelangen.

Eine weitere Ausführung des Standes der Technik sieht den Einsatz eines O-Rings in der Nut vor. Dieser Einsatz erfordert eine große Vorspannung bzw. Vorpressung des Verschlusses gegenüber dem Rohr, die nur durch einen aufwendigen Spezialwerkzeugeinsatz erreichbar ist. Problematisch hierbei sind der Ein- und besonders der Ausbau des Verschlusses insbesondere bei großen Rohrdurchmessern.

Aus der US 4,687,026 ist eine Rohrabsperrvorrichtung bekannt, die zum Verschließen eines Endabschnittes eines Rohres dient. Diese Rohrabsperrvorrichtung dient dazu, die zwei Rohre, die einander gegenüberliegend in einem Gulli münden, abzuschließen, Dabei wird die Absperrvorrichtung durch den gesamten Gulli gespannt, wobei eine Stützplatte über der Rohröffnung des Ablaufes zu Liegen kommt, während das gegenüberliegende Rohr durch einen Stopfen verschlossen wird. Damit eine Absperrvorrichtung gemäß US 4,687,026 zur Anwendung kommen kann, bedarf es einer dem zu verschließenden Rohr gegenüberliegenden Wand.

US 5,230,437 beschreibt eine Vorrichtung zum Öffnen und Verschließen rohrenförmiger Bauteile von Containerlagerungseinheiten zur Speicherung von Flüssigkeiten. Die Vorrichtung umfasst eine Dichtung, welche zwischen zwei Ringen angeordnet ist. Durch Festziehen eines Bolzens werden die beiden ringartigen Platten aufeinander zu bewegt, wobei die Dichtung zusammengedrückt wird und sich radial zur Rohrwand hin ausdehnt. Damit eine Abdichtung erfolgt ist, ist folglich menschliches Zutun erforderlich.

Aus der WO 2004/057230 A1 ist ebenfalls eine Vorrichtung zum Abdichten eines Rohres, vorzugsweise einer Gasleitung, bekannt. Dabei wird von einem Ende der Leitung ein ausdehnbarer Stopfen in das Rohr eingeführt, indem ein schmales Verlängerungsrohr benutzt wird, welches mit dem Stopfen über einen Bajonett-Verschluss verbunden ist. Der Stopfen umfasst zwei gegenüberliegende Seitenwände, zwischen den ein elastomeres Material angeordnet ist. Die beiden Seitenwände sind durch eine Feststellschraube miteinander verbunden. Durch Festziehen der Schraube werden die beiden Seitenwände aufeinander zu bewegt, wobei das elastomere Material an den beiden offenen Seiten des Stopfens, d.h. in Richtung der Rohrwände, herausgedrückt wird, wodurch das Rohr verschlossen wird. Die Anwendung der Vorrichtung erfordert Fingerspitzengefühl und auch hier lässt sich ein Verschluss des Rohres nur durch unmittelbar vorangehende menschliche Einwirkung erreichen.

In der US 3,931,670 ist ein Kopptungsstück zur Verbindung von zwei Rohrteilen, z.B. beim Bau von Pipelines, beschrieben. Dabei wird der Druck des Wassers genutzt, um einen Stopfen zu lösen, der vormals das neue Rohrteil verschlossen hat.

Aus der DE 36 39 932 A1 ist ein Membranmodul für eine Membrantrennanlage beschrieben, welches an das offene Ende eines Druckrohres druckdicht einsetzbar ist, ohne dass die Zuhilfenahme von Manschetten etc. erforderlich ist. Eine Vorrichtung gemäß der DE 36 39 932 A1 ist jedoch nicht zum Verschließen des Endabschnittes eines Rohres geeignet.

Es ist Aufgabe der Erfindung, eine Anordnung zum Verschließen eines Endabschnittes eines Rohes oder eines rohrförmigen Behältnisses bereitzustellen, mit der ein Hindurchtreten des Mediums entweder aus dem Behältnis heraus oder in das Behältnis hinein vermieden wird und ein einfacher Ein- und Ausbau ohne großen Spezialwerkzeugzeugeinsatz.

Die Aufgabe wird erfindungsgemäß dadurch gelöst, dass an wenigstens einer der zueinander zeigenden Seiten der Platten im Dichtungsbereich ein Vorsprung angeordnet ist, der bei Druckbeaufschlagung auf die Abdichtplatte eine Verformung der Dichtung in Richtung der Innenwand des Rohres oder rohrförmigen Behältnisses bewirkt, um eine Abdichtungswirkerhöhung zu erhalten, und dass ein Spannelement vorgesehen ist; mit dem die durch die Beaufschlagung entstandene Verformung der Dichtung im nicht- bzw. gering druckbeaufschlagten Zustand der Abdichtplatte beibehaltbar ist, und die Dichtung eine Lippendightung ist, dass im Bereich zum Anbringen der Dichtung eine Nut vorgesehen ist, wobei die Nut an der Abdichtplatte und/oder an der Frontplatte angeordnet ist und der Vorsprung keilförmig ist.

Durch die Bereitstellung des Vorsprungs im Dichtungsbereich wird eine größere Verformung der Dichtung bewirkt. Die Verformung wird auch dann bereitgestellt, wenn lediglich geringe Drücke auf die Innenseite der Abdichtplatte wirken. Ist die Druckbeaufschlagung in vollem Umfang herbeigeführt, so kann durch das Spannelement die Verformung der Dichtung auch in dem Fall auf einfach Weise beibehalten werden, dass die Druckbeaufschlagung der Innenseite der Abdichtplatte reduziert wird.

Gleichzeitig werden auch ein einfaches Einbauen und ein einfaches Ausbauen der erfindungsgemäßen Anordnung möglich. Da keine Vorpressung notwendig ist, erfolgt der Einbau kraftlos und im Wesentlichen kontaktfrei im Bezug auf das Rohr. Die Abdichtung wird durch das Druckbeaufschlagen der Abdichtplatte bewirkt, wodurch die Dichtung verformt wird. Der Ausbau erfolgt ebenfalls kraftlos und im Wesentlichen kontaktfrei, da im druckbeaufschlagten Zustand das Spannelement gelöst wird, was auf einfache Weise möglich ist. Anschließend wird die Druckbeaufschlagung auf die Abdichtplatte aufgehoben, wodurch die Anordnung ohne Vorspannung sich im Rohr befindet und entnommen werden kann, da keine Vorpressung vorhanden ist.

Die Erfindung sieht vor, dass mit einer Lippendichtung kann eine verbesserte Abdichtwirkung erzielt werden. Weiterhin können an den Enden der Lippendichtung Ausformungen vorgesehen sein, die eine Abdichtungsverstärkung bewirken.

Durch das Vorsehen einer Nut ist ein besseres Anbringen der Dichtung und eine gleichzeitig verbesserte Dichtwirkung zu erzielen.

Die Erfindung sieht vor, dass der Vorsprung keilförmig ist. Dieses ist vorteilhaft, da ein dosierteres Aufbringen der Verformung in die Dichtung erreicht werden kann. Der Vorsprung kann auch auf beiden Seiten der Platten angeordnet sein und damit die Dichtung von beiden Seiten aus komprimieren. Eine weitere Lehre der Erfindung sieht vor, dass die Dichtung breiter als die Nut ist. Durch das Vorsehen einer breiteren Dichtung kann eine verbesserte Dichtwirkung erzielt werden.

Weiterhin ist vorteilhaft, dass das Spannelement gegen die Frontplatte wirkt und diese gegenüber der Abdichtplatte arretiert. Auf dieses Weise lässt sich in einfacher Art ein Beibehalten der Verformung der Dichtung und damit der abdichtenden Wirkung gegenüber der Innenwand des Rohres bzw. des rohrförmigen Behältnisses erzielen. Vorteilhaft ist, wenn es sich bei dem Spannelement um eine Mutter handelt. Besonders bevorzugt ist, wenn die Mutter auf einem Vorsprung der Abdichtplatte aufgeschraubt ist, der durch die Frontplatte hindurchtritt. Besonders bevorzugt ist hierbei, wenn der Vorsprung gegenüber der Frontplatte beweglich ausgeführt ist. Dieses stellt eine einfache und kostengünstige bereitzustellende Ausführungsform dar. Außerdem ist es beim Vorsehen eine Mutter möglich, das Arretieren durch einfaches Aufschrauben der Mutter gegen die Frontplatte zu bewirken, wobei ein handfestes Aufschrauben ausreichend für das Bereitstellen einer Dichtwirkung ist.

Eine weitere Lehre der Erfindung sieht vor, dass die Anordnung mittels Widerlager im Rohr bzw. rohrförmigen Behältnis gehalten wird. Bevorzugt ist dabei, dass es sich bei dem Widerlager um einen Rückhaltering handelt, der in eine Vertiefung im Rohr bzw. rohrförmigen Behältnis eingreift. Besonders bevorzugt besteht dabei das Widerlager aus Segmenten. Das Widerlager ist besonders bevorzugt mittel Arretierung mit der Frontplatte verbunden. Auf diese Weise wird ein einfaches Verbinden der Anordnung mit der Innenwand des Rohres bzw. rohrförmigen Behältnisses erreicht.

Eine weitere Lehre der Erfindung sieht vor, dass die Dichtung mittels Spannelement vorspannbar ist. Durch ein erstes Vorspannen des Spannelements, beispielsweise vor der ersten Inbetriebnahme, wird eine erste Verformung der Dichtung gegenüber der Innenseite des Rohres bzw. rohrförmigen Behältnisses bewirkt und damit eine erste Dichtungswirkung erzeugt.

Nachfolgend wird die Erfindung anhand einer Zeichnung eines erfindungsgemäßen Ausführungsbeispieles näher erläutert, wobei in der Zeichnung
- Figur 1: eine Schnittansicht durch eine erfindungsgemäße Anordnung zeigt,
- Figur 2: eine vergrößerte Ansicht des Abschnitts X von Figur 1 zeigt,
- Figur 3: eine Explosionsansicht einer erfindungsgemäßen Anordnung zeigt,
- Figur 4: eine Draufsicht auf eine erfindungsgemäße Anordnung zeigt, und
- Figur 5: eine Schnittansicht durch eine erfindungsgemäße Anordnung im einge- bauten Zustand in einem rohrförmigen Behältnis zeigt.

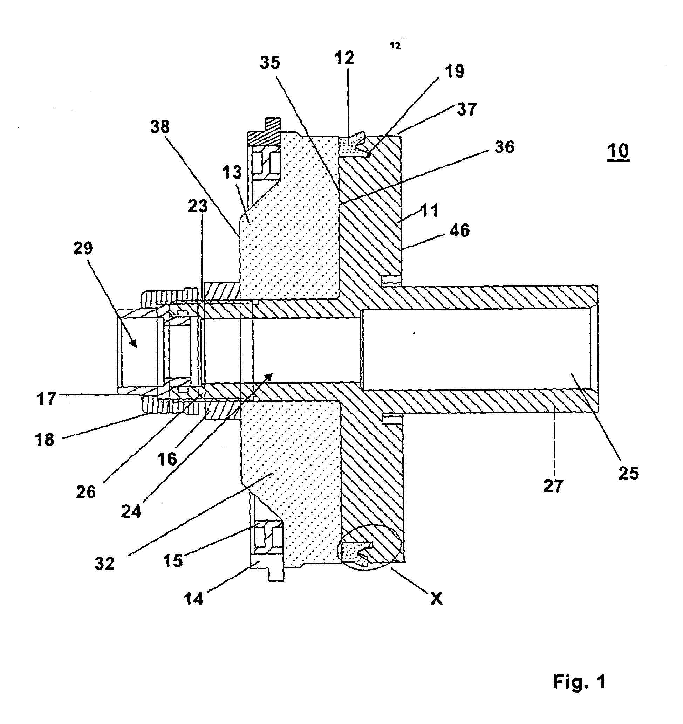

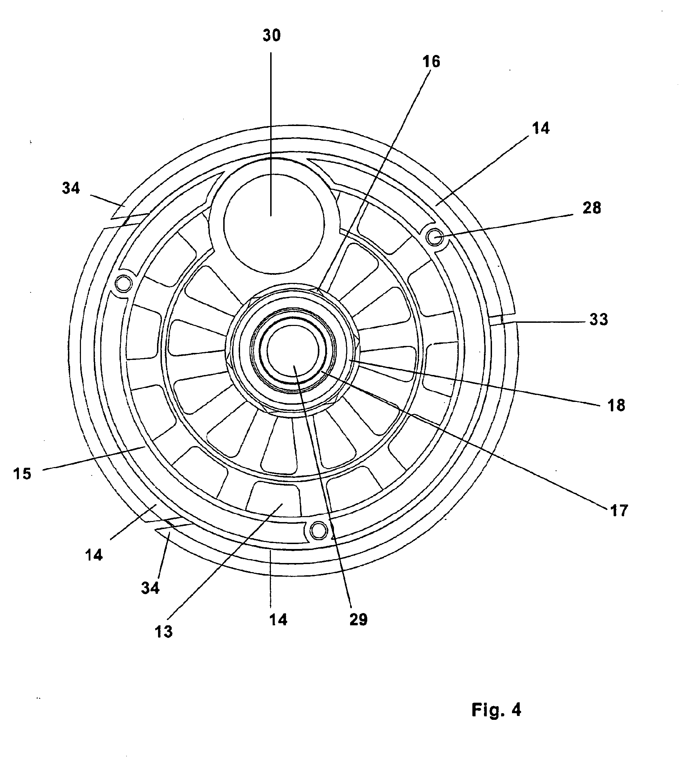

Figur 1 zeigt eine Schnittansicht einer erfindungsgemäßen Anordnung 10. Die Anordnung 10 besteht aus einer Abdichtplatte 11 und einer Frontplatte 13, die sich an der nach außen zeigenden Wand 36 der Abdichtplatte und der nach innen zeigenden Wand 35 der Frontplatte 13 berühren. Am äußeren radialen Ende 37 der Abdichtplatte 11 ist eine Nut 19 vorgesehen, in die eine Dichtung 12 eingesetzt ist. Die Frontplatte 13 weist mittig eine erste Öffnung 24 auf, durch die ein Vorsprung 26 der Abdichtplatte 11 eingesetzt ist. Die Abdichtplatte 11 weist des Weiteren einen von der Frontplatte 13 weggerichteten Anschlussabschnitt 27 auf. Im Inneren des Anschlussabschnittes 27 und des Vorsprungs 26 ist ein Kanal 25 vorgesehen, der durch die gesamte Abdichtplatte 11 hindurchgeführt ist. Das äußere Ende des Vorsprungs 26 ist mit einem Gewindeabschnitt 23 versehen. Auf dem Gewindeabschnitt 23 ist ein Spannelement 16 in Form einer Mutter aufgeschraubt. Die Mutter 16 befindet sich im vollständig aufgeschraubten Zustand mit einer Frontfläche 38 der Frontplatte 13 in Kontakt. In das äußere Ende des Vorsprungs 26 bzw. des Kanals 25 ist ein Anschlussstück 17 eingesetzt, das mit einem Befestigungselement 18 in Form einer Mutter mit dem Vorsprung 26 verbunden ist. Die Mutter 18 ist dabei ebenfalls auf dem Gewindeabschnitt 23 des Vorsprungs 26 aufgeschraubt. Auf der Frontfläche 38 ist ein Widerlager 14 angeordnet, das aus drei Segmenten aufgebaut ist, wobei sich die Segmente in Übergangsbereichen 33, 34 (siehe Figur 4) zueinander angeordnet sind. Der Segmentübergang 33 ist dabei bezogen auf die Frontfläche 38 der Frontplatte 13 lotrecht zu dieser angeordnet, während die Segmentübergänge 34 zur Frontfläche 38 in einen Winkel einfallend angeordnet sind. Auf dem Widerlager 14 ist ein Arretierring 15 vorgesehen, der die Widerlagersegmente 14 gegen die Frontfläche 38 der Frontplatte 13 drückt. In dem Arretierring 15 sind Bohrungen 28 vorgesehen, die mit Bohrungen 31 der Frontplatte 13 korrespondieren. Der Arretierring 15 wird mit der Frontplatte 13 mittels Schrauben (nicht dargestellt) haltend verbunden. Die Frontplatte 13 weist des Weiteren einen Vorsprung 32 auf.

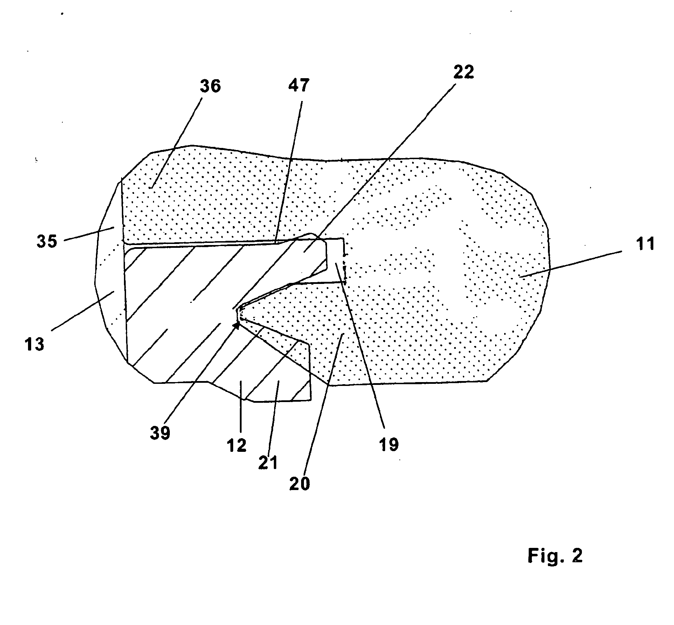

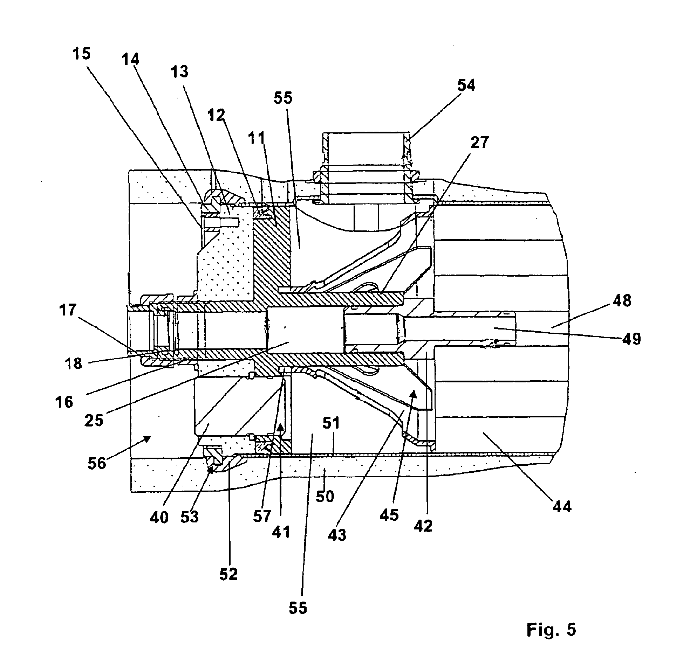

In der Nut 19 ist die Dichtung 12 angeordnet (siehe Figur 2). Die Dichtung 12 ist als Lippendichtung ausgeführt, die eine äußere Lippe 21 und eine innere Lippe 22 aufweist, zwischen denen eine Vertiefung 39 vorgesehen ist. In die Vertiefung 39 greift ein Vorsprung 20 der Abdichtplatte 11 ein, der vorliegend keilförmig ausgeführt ist. Dieser keilförmige Vorsprung 20 drückt bei Druckbeaufschlagung einer Innenwand 46 der Abdichtplatte 11 in die Vertiefung 39 der Dichtung 12 und bewirkt ein Auseinanderschieben der inneren und äußeren Lippe 21, 22 zum einen gegen eine Innenseite 47 der Nut 19 und zum anderen gegen eine Innenwand, vorliegend einen Liner, 51 eines Rohres 50 (siehe Figur 5).

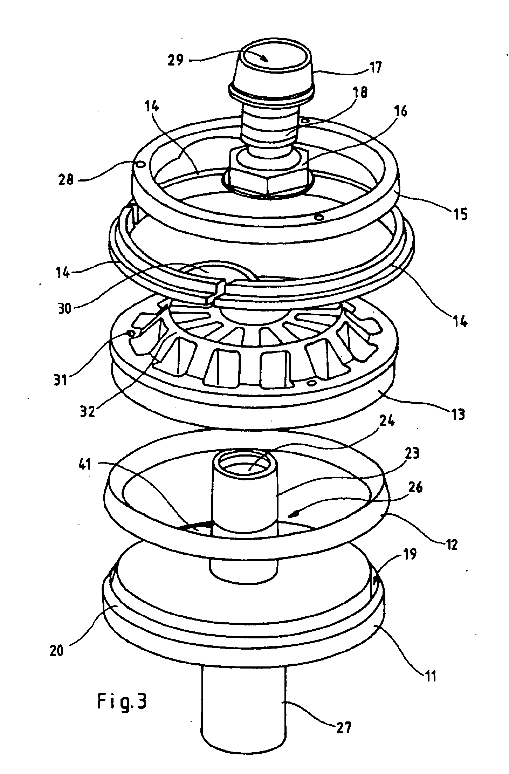

Figur 3 zeigt eine Explosionsansicht der erfindungsgemäßen Anordnung 10. Bei Betrachten dieser Figur 3 wird der erfindungsgemäße Aufbau der Anordnung 10 deutlich. Gut zu erkennen ist insbesondere die Nut 19 und der keilförmige Vorsprung 20. Sichtbar ist des Weiteren eine zweite asymmetrische Öffnung 41 in der Abdichtplatte 11 und eine zweite asymmetrische Öffnung 30 in der Frontplatte 13. Das Anschlussstück 17 weist einen Austritt 29 auf. Figur 4 zweigt eine Draufsicht auf die zuvor beschriebenen Elemente bzw. auf die Frontplatte 13.

In Figur 5 ist die Anordnung 10 im eingesetzten Zustand in ein Rohr 50 dargestellt. Neben der Anordnung 10 befinden sich im Rohr 50 ein Membranfilter 44, der einen Zentralkanal 48 aufweist. In den Zentralkanal 48 ist ein Anschlusselement 42 eingesetzt, das wiederum in den Anschlussabschnitt 27 der Abdichtplatte 11 eingesetzt ist. Das Anschlusselement 42 weist einen Kanal 49 auf, der einen durchgängigen Kanal von dem Zentralkanal 48 zum Austritt 29 am äußersten Rohr des abseitigen Endes der Anordnung 10 bewirkt. Auf der Innenwand 46 der Abdichtplatte 11 ist eine ringförmige Vertiefung 57 vorgesehen, die um den Anschlussabschnitt 27 herum angeordnet ist. In die Vertiefung 57 wird ein Abstandselement 43 eingesetzt, das an seinem von der Abdichtplatte 11 abgewandten Ende den Membranfilter 44 stützend aufnimmt. Das Abstandselement 43 weist Zwischenräume 45 auf, durch die Flüssigkeiten, die aus dem Membranfilter 44 nicht im Zentralbereich austreten, in einem Aufnahmeraum 55 des Rohres 50 eintreten können. Der Aufnahmeraum 55 ist mit einem Auslass 54 verbunden, durch den die ausgetretene Flüssigkeit aus dem Aufnahmeraum 55 austreten kann. Wird der Auslass 54 verwendet, so ist, wie in Figur 5 dargestellt, die zweite Öffnung 41 der Abdichtplatte 11 und die zweite Öffnung 30 der Frontplatte 13 mit einem Stopfen 40 verschlossen. Im Bereich eines vorderen Rohrendabschnitts 56 des Rohres 50 ist ein Einsatz 52 in den Endbereich des Liners 51 in die Wand des Rohres 50 eingesetzt, der eine Vertiefung 53 aufweist. In die Vertiefung 53 werden die Widerlagersegmente 14 der Anordnung 10 eingesetzt, damit die Anordnung 10 im Rohr gehalten werden kann.

Bei einem ersten Einbau der Anordnung 10 im Rohr 50 wird das Anschlusselement 42 in den Zentralkanal 48 des Membranfilters 44 eingesetzt. Anschließend wird das Abstandselement 43 eingesetzt und auf das Anschlusselement 42 und das Abstandselement 43 wird die Abdichtplatte 11 aufgesetzt. Die Dichtung 12 ist dabei bereits auf die Abdichtplatte 11 aufgebracht. Anschließend wird die Frontplatte 13 auf den Vorsprung 26 aufgesteckt und gegen die äußere Wand 36 der Abdichtplatte 11 geschoben. Anschließend werden die Widerlagersegmente 14 in die Vertiefung 53 eingesetzt und der Arretierring 15 zum Verbinden der Frontplatte mit dem Widerlager gegen die Frontplatte 13 verschraubt. Anschließend wird das Spannelement 16 lose auf den Gewindeabschnitt 23 des Vorsprungs 26 gegen die Frontplatte 13 verschraubt.

Nachfolgend kann entweder eine Druckbeaufschlagung des Membranfilters erfolgen, so dass Druck auf der Innenwand 46 der Abdichtplatte 11 aufgebaut wird und diese gegen die Frontplatte 13 und gegen das Widerlager 14 verschiebt. Bei dem druckbeaufschlagten Verschieben wird die Dichtung 12 bzw. die Dichtlippen 21 und 22 durch den keilförmigen Vorsprung 20 verformt, wodurch eine Verbesserung der Dichtwirkung erzeugt wird bzw. die Dichtwirkung überhaupt erst hergestellt wird. Anschließend wird das Spannelement 16 gegen die Frontplatte 13 verschraubt, damit nach Druckreduzierung die erreichte Verformung der Dichtung 12 beibehalten werden kann. Hierbei ist ein handfestes Anschrauben oft ausreichend. Es wird also ein automatisches Abdichten herbeigeführt bzw. die Dichtkraft wird automatisch bei Beginn des bestimmungsgemäßen Einsatzes der Anordnung 10 bereitgestellt. Der Ausbau der Anordnung 10 beispielsweise für Wartungsarbeiten am rohrförmigen Behälter 50 erfolgt in umgekehrter Reihenfolge. Das Spannelement 16 wird gelöst bspw. durch händisches Lösen der Mutter, die Druckbeaufschlagung auf die Abdichtplatte 11 wird beendet, die Dichtung 12 entspannt sich und der Ausbau der Anordnung 10 kann durch Lösen des Arretierrings 15 begonnen werden. Spezialwerkzeuge sind wie beim Einbau nicht notwendig.

Alternativ kann vor Druckaufbau auf die Innenwand 46 der Abdichtplatte 11 das Spannelement 16 auf dem Gewindeabschnitt 23 gegen die Frontplatte 13 verschraubt werden, um eine Vorspannung zwischen Abdichtplatte 11 und Frontplatte 13 und damit eine Verformung der Dichtung 12 zu bewirken. Anschließend wird die Druckbeaufschlagung vorgenommen, die Dichtung 12 wird weitergehend verformt und anschließend das Spannelement 16 weiter gegen die Frontplatte 13 auf dem Gewindeabschnitt 23 verschraubt. Alternativ kann auch eine selbstspannende Spannvorrichtung als Spannelement 16 eingesetzt werden.

Des Weiteren wird das Anschlussstück 16 in den Vorsprung 26 bzw. in den Kanal 25 des Vorsprungs 26 eingesetzt und das Befestigungselement 18 auf dem Gewindeabschnitt 23 zur Befestigung des Anschlussstückes 17 mit der Abdichtplatte 11 aufgeschraubt. Die vom Membranfilter 44 gefilterte Flüssigkeit tritt durch den Zentralkanal 48 und den Kanal 49 über den Kanal 25 aus dem Austritt 29 des Anschlussstücks 17 aus. Nicht gereinigte oder nicht hinreichend gereinigte Flüssigkeit gelangt aus dem Membranfilter durch den Zwischenraum 45 in den Aufnahmeraum 55 und von da entweder aus dem Auslass 54 aus dem Rohr 50 oder durch die zweite Öffnung 41 und die zweite Öffnung 30 durch die Anordnung 10 hindurch aus dem Rohr 50 hinaus.

### Bezugszeichenliste

- 10: Anordnung
- 11: Abdichtplatte
- 12: Dichtung
- 13: Frontplatte
- 14: Widerlager/Widerlagersegment
- 15: Arretierring
- 16: Spannelement/Mutter
- 17: Anschlussstück
- 18: Befestigungselement/Mutter
- 19: Nut
- 20: Vorsprung
- 21: äußere Lippe
- 22: innere Lippe
- 23: Gewindeabschnitt
- 24: erste Öffnung in Frontplatte, mittig
- 25: Kanal
- 26: Vorsprung
- 27: Anschlussabschnitt
- 28: Bohrung
- 29: Austritt
- 30: zweite Öffnung in Frontplatte, asymmetrisch
- 31: Bohrung
- 32: Vorsprung der Frontplatte
- 33: Segmentübergang, lotrecht
- 34: Segmentübergang, geneigt
- 35: Innenseite der Frontplatte
- 36: Außenseite der Anschlussplatte
- 37: äußeres radiales Ende der Anschlussplatte
- 38: Frontfläche
- 39: Vertiefung
- 40: Stopfen
- 41: zweite Öffnung der Abdichtplatte, asymmetrisch
- 42: Anschlusselement
- 43: Abstandselement
- 44: Membranfilter
- 45: Zwischenraum
- 46: Innenwand der Abdichtplatte
- 47: Innenseite der Nut
- 48: Zentralkanal
- 49: Kanal
- 50: Rohr
- 51: Liner
- 52: Einsatz
- 53: Vertiefung
- 54: Auslass
- 55: Aufnahmeraum
- 56: Rohrabschnitt
- 57: Vertiefung

## Patentansprüche

1. Anordnung zum Verschließen eines Endabschnitts eines Rohres (50) oder eines rohrförmigen Behältnisses (50) mit einer zum Rohr (50) zeigend angeordneten Abdichtplatte (11) und einer vom Rohr (50) wegzeigend angeordneten Frontplatte (13), wobei im äußeren Randbereich der Platten (11, 13) eine umlaufende Dichtung (12) angeordnet ist, die sich, zumindest teilweise, zwischen den zueinander zeigenden Seiten (35, 36) der Platten (11,13) befindet, wobei an wenigstens einer der zueinander zeigenden Seiten (35, 36) der Platten (11, 13) im Dichtungsbereich ein Vorsprung (20) angeordnet ist, der bei Druckbeaufschlagung auf die Abdichtplatte (11) eine Verformung der Dichtung (12) in Richtung Innenwand des Rohres (50) oder rohrförmigen Behältnisses (50) bewirkt, um eine Abdichtungswirkerhöhung zu erhalten, und dass ein Spannelement (16) vorgesehen ist, mit dem die durch die Beaufschlagung entstandene Verformung der Dichtung (12) im nicht- bzw. gering druckbeaufschlagten Zustand der Abdichtplatte (11) beibehaltbar ist, **dadurch gekennzeichnet, dass** die Dichtung (12) eine Lippendichtung ist und dass im Bereich zum Anbringen der Dichtung (12) zwischen den Platten (11, 13) eine Nut (19) vorgesehen ist, wobei die Nut (19) an der Abdichtplatte (11) und/oder an der Frontplatte (13) angeordnet ist, und der Vorsprung (20) keilförmig ist.

2. Anordnung nach Anspruch 1, **dadurch gekennzeichnet, dass** die Dichtung (12) breiter ist als die Nut (19) ist.

3. Anordnung nach einem der Ansprüche 1 bis 2, **dadurch gekennzeichnet, dass** das Spannelement (16) gegen die Frontplatte (13) wirkt und diese gegenüber der Abdichtplatte (11) arretiert.

4. Anordnung nach einem der Ansprüche 1 bis 3, **dadurch gekennzeichnet, dass** es sich bei dem Spannelement (16) um eine Mutter handelt.

5. Anordnung nach Anspruch 4, **dadurch gekennzeichnet, dass** die Mutter (16) auf einem Vorsprung (26) der Abdichtplatte (11) aufgeschraubt ist, der durch die Frontplatte (13) hindurchtritt.

6. Anordnung nach einem der Ansprüche 1 bis 5, **dadurch gekennzeichnet, dass** die Anordnung (10) mittels Widerlager (14) im Rohr (50) bzw. im rohrförmigen Behältnis (50) gehalten wird.

7. Anordnung nach Anspruch 6, **dadurch gekennzeichnet, dass** es sich bei dem Widerlager (14) um einen Rückhaltering handelt, der bevorzugt in eine Vertiefung (53) im Rohr (50) bzw. rohrförmigen Behältnis (50) eingreift.

8. Anordnung nach Anspruch 6 oder 7, **dadurch gekennzeichnet, dass** das Widerlager (14) aus Segmenten besteht.

9. Anordnung nach einem der Ansprüche 6 bis 8, **dadurch gekennzeichnet, dass** das Widerlager (14) mittels Arretierring (15) mit der Frontplatte (13) verbunden ist.

10. Anordnung nach einem der Ansprüche 1 bis 9, **dadurch gekennzeichnet, dass** die Dichtung (12) mittels Spannelement (16) vorspannbar ist.

## Claims

1. An arrangement for sealing an end portion of a pipe (50) or of a tubular container (50), having a sealing plate (11), arranged directed towards the pipe (50), and a front plate (13), arranged directed away from the pipe (50), wherein a circumferential seal (12) is arranged in the outer edge region of the plates (11, 13) and is located, at least partially, between the sides (35, 36), directed towards one another, of the plates (11, 13), wherein on at least one of the sides (35, 36), directed towards one another, of the plates (11,13) there is arranged in the sealing region a projection (20) which, when pressure is exerted upon the sealing plate (11), brings about a deformation of the seal (12) in the direction of the inner wall of the pipe (50) or tubular container (50) in order to obtain an increase in the sealing effect, and in that a tensioning element (16) is provided by means of which the deformation, due to the exertion of pressure, of the seal (12) can be retained when the sealing plate (11) is in the state in which it is not acted upon by pressure or is only acted upon by pressure to a slight extent, **characterised in that** the seal (12) is a lip seal and **in that** a groove (19) is provided in the region for the mounting of the seal (12) between the plates (11, 13), wherein the groove (19) is arranged at the sealing plate (11) and/or at the front plate (13) and the projection (20) is wedge-shaped.

2. An arrangement according to claim 1, **characterised in that** the seal (12) is wider than the groove (19).

3. An arrangement according to one of claims 1 to 2, **characterised in that** the tensioning element (16) acts against the front plate (13) and locks the latter in position with respect to the sealing plate (11).

4. An arrangement according to any one of claims 1 to 3, **characterised in that** the tensioning element (16) is a nut.

5. An arrangement according to claim 4, **characterised in that** the nut (16) is screwed on a projection (26) of the sealing plate (11), which projection passes through the front plate (13).

6. An arrangement according to any one of claims 1 to 5, **characterised in that** the arrangement (10) is held in the pipe (50) or in the tubular container (50) by means of a counter bearing (14).

7. An arrangement according to claim 6, **characterised in that** the counter bearing (14) is a retaining ring preferably engaging a recess (53) in the pipe (50) or tubular container (50).

8. An arrangement according to claim 6 or 7, **characterised in that** the counter bearing (14) consists of segments.

9. An arrangement according to any one of claims 6 to 8, **characterised in that** the counter bearing (14) is connected to the front plate (13) by means of a locking ring (15).

10. An arrangement according to any one of claims 1 to 9, **characterised in that** the seal (12) can be pretensioned by means of a tensioning element (16).

## Revendications

1. Agencement pour fermer une portion d'extrémité d'un tube (50) ou d'un contenant tubulaire (50) au moyen d'une plaque d'étanchéité (11) orientée vers le tube (50) et d'une plaque frontale (13) orientée à l'opposé du tube (50), dans la zone de bord extérieur des plaques (11, 13) étant disposé un joint périphérique (12) qui se trouve au moins partiellement entre les faces en vis-à-vis (35, 36) des plaques (11, 13), au niveau d'une des faces en vis-à-vis (35, 36) des plaques (11, 13) étant disposée, dans la zone d'étanchéité, une saillie (20) qui, lors de la mise en pression de la plaque d'étanchéité (11), provoque une déformation du joint (12) en direction de la paroi intérieure du tube (50) ou du contenant tubulaire (50) afin d'accroître l'effet d'étanchéité, et en ce qu'il est prévu un élément de serrage (16) qui, lorsque la plaque d'étanchéité (11) est soumise à une pression nulle, respectivement faible, permet de conserver la déformation du joint (12) obtenue par la mise en pression, **caractérisé en ce que** le joint (12) est un joint à lèvres, **en ce qu'**une rainure (19) est prévue dans la zone de pose du joint (12) entre les plaques (11, 13), la rainure (19) étant ménagée dans la plaque d'étanchéité (11) et/ou dans la plaque frontale (13), et **en ce que** la saillie (20) possède la forme d'un coin.

2. Agencement selon la revendication 1, **caractérisé en ce que** le joint (12) est plus large que la rainure (19).

3. Agencement selon une des revendications 1 et 2, **caractérisé en ce que** l'élément de serrage (16) agit contre la plaque frontale (13) et bloque celle-ci par rapport à la plaque d'étanchéité (11).

4. Agencement selon une des revendications 1 à 3, **caractérisé en ce que** l'élément de serrage (16) est constitué par un écrou.

5. Agencement selon la revendication 4, **caractérisé en ce que** l'écrou (16) est vissé sur une saillie (26) de la plaque d'étanchéité (11), laquelle traverse la plaque frontale (13).

6. Agencement selon une des revendications 1 à 5, **caractérisé en ce que** l'agencement (10) est maintenu dans le tube (50), respectivement dans le contenant tubulaire (50), au moyen de contre-appuis (14).

7. Agencement selon la revendication 6, **caractérisé en ce que** le contre-appui (14) est constitué par un anneau de retenue qui, de préférence, s'engage dans un renfoncement (53) du tube (50), respectivement du contenant tubulaire (50).

8. Agencement selon la revendication 6 ou 7, **caractérisé en ce que** le contre-appui (14) est constitué de segments.

9. Agencement selon une des revendications 6 à 8, **caractérisé en ce que** le contre-appui (14) est relié à la plaque frontale (13) au moyen d'un anneau de blocage (15).

10. Agencement selon une des revendications 1 à 9, **caractérisé en ce que** le joint (12) peut être précontraint au moyen de l'élément de serrage (16).
